# EUROPEAN PATENT SPECIFICATION

(11) **EP 2 097 488 B1**
(45) Date of publication and mention of the grant of the patent: **18.04.2018**
(21) Application number: 07867983.4
(22) Date of filing: 21.12.2007
(51) Int. Cl.: C09D 5/00, C09D 15/00, B27K 3/15, B27K 5/02

(54) **PRETREATMENT AND STAIN SYSTEM**
VORBEHANDLUNGS- UND FÄRBUNGSSYSTEM
SYSTÈME DE PRÉTRAITEMENT ET DE COLORATION

(30) Priority: 29.12.2006 US 882744 P
(43) Date of publication of application: 09.09.2009
(73) Proprietor: Sherwin-Williams Luxembourg Investment Management Company S.à r.l., 1857 Luxembourg (LU)
(72) Inventor: REUTER, James, M., Cleveland Heights, OH 44106 (US); TOMKO, Richard, F., North Olmsted, OH 44070 (US); GIERLACH, Edward, W., Jr., Dacula, GA 30019 (US); MASTERS, Paul, Elyria, OH 44035 (US)
(74) Representative: Heinemann, Monica
(86) International application number: PCT/US2007/026230
(87) International publication number: WO 2008/085431

(56) References cited:
- US-A- 3 008 847
- US-A- 5 486 231
- US-A1- 2006 036 029

## Description

This invention relates to a multi-coat system and a process for staining substrates, especially porous substrates such as wood. The system comprises (a) a first coat comprising a non-aqueous pretreatment composition and (b) a second coat comprising a stain, especially an aqueous stain, and typically comprising an aqueous transparent, semi-transparent, or solid color stain. In a typical application, the non-aqueous pretreatment will be applied to a substrate and allowed at least a short time period to begin to penetrate the substrate and for solvent, if any, to begin to evaporate. The stain can then be applied to the pretreated substrate. In many embodiments the stain would typically be applied within about seven days after application of the pretreatment.

The non-aqueous pretreatment composition comprises a carbohydrate-based alkyd. By "carbohydrate-based alkyd" is meant an alkyd wherein at least some of the hydroxyl equivalency of the underlying carbohydrate has been reacted to provide a pendent fatty acid residue. The carbohydrate-based alkyds have a relatively low molecular weight and pendent fatty acid groups. As used herein, the term "fatty acid residue" means the group R' of a fatty acid R'-COOH, or of the corresponding fatty acid derivative. The R' group will typically be pendent from the backbone through an ester linkage. The alkyds may be cured by any acceptable method, such as, for example, oxidative curing at ambient or elevated temperatures. In one useful application, the alkyds described herein can provide low viscosity compositions especially suited as pretreatments for wood substrates prior to the application of a sealant or of a transparent, semi-transparent, or solid color stain. One useful application involves the use of the pretreatment in combination with an aqueous transparent or semi-transparent stain to provide a durable, attractive appearance to porous substrates without the use of excessive amounts of organic solvents. Useful application viscosities of the pretreatment compositions can be readily obtained at volatile organic compound (VOC) levels of 250 grams per liter or less.

The carbohydrate-based alkyds are particularly useful in pretreatment compositions due to their low molecular weight and carbohydrate structure. The carbohydrate backbone of the carbohydrate based alkyds of this invention makes them especially compatible with wood substrates and their low molecular weight allows them to readily penetrate into the pores of the wood. The low molecular weight of the alkyds also allows for the production of pretreatment compositions requiring very low levels of solvent. Due to their non-aqueous nature, these alkyds do not swell the wood as some aqueous materials would, and their non-aqueous nature facilitates the incorporation of additives such as UV absorbers and light stabilizers and other additives that may have limited water solubility. A multi-coat system utilizing a combination of the non-aqueous pretreatment along with a subsequent application of an aqueous stain can provide excellent wood protection with only minimal volatile organic content.

This invention therefore relates to a pretreatment composition comprising carbohydrate-based alkyds having pendent drying oil or semidrying oil fatty acid residues. In one embodiment, from about 3 percent to about 97 percent, on average, of the initial hydroxyl equivalency of the carbohydrate is consumed by reaction with saturated or unsaturated fatty acids or reactive derivatives thereof having from about 6 to about 30, and generally 6 to about 18, carbon atoms.

As used herein, the term "carbohydrates" generally includes, but is not limited to, polyhydroxy aldehydes, polyhydroxy ketones, or compounds that can be hydrolyzed to them. Representative naturally occurring carbohydrates include sugars, starches and fibers such as cellulose. For some applications of this invention, the carbohydrate substances are selected from the group consisting of monosaccharides, oligosaccharides, and polysaccharides having from 2 to about 15 saccharide units per molecule. As used herein, the term "carbohydrates" also includes those substances obtained from saccharides or other carbohydrates by reduction of the carbonyl group such as alditols, by oxidation of one or more terminal groups to carboxylic acids, or by replacement of one or more hydroxyl groups by a hydrogen atom, an amino group, a thiol group or other heteroatomic groups, as well as reactive derivatives of these compounds. Although sugar alcohols are not carbohydrates in a strict sense, the naturally occurring sugar alcohols are so closely related to the carbohydrates that they are also practical for use herein and are included in the term "carbohydrates" for purposes of this invention. The sugar alcohols most widely distributed in nature and suitable for use herein include sorbitol, mannitol and galactitol. The carbohydrates provide an effective backbone for the alkyds of this invention and have the advantage of being a renewable resource as opposed to petroleum-based raw materials.

In one embodiment, this invention relates to pretreatment compositions comprising the alkyds of this invention, optionally in combination with other air-drying compositions, such as conventional alkyds.

The pre-treatment compositions of this invention typically comprise the non-aqueous solution of:
(i) A carbohydrate-based alkyd having pendent fatty acid groups;
(ii) optionally, a dye or pigment; and
(iii) optionally, at least one other air drying polymer;
(iv) optionally at least one organic solvent, and
(v) at least one drier for initiating cure.

The non-aqueous pretreatments can be applied to any substrate, but are especially suited for application to porous substrates such as wood or paper. The non-aqueous pretreatments are subsequently topcoated with an aqueous stain, such as an aqueous transparent or semi-transparent or solid color stain.

The carbohydrate-based alkyds of this invention have pendant fatty acid residues and can cure by oxidative curing. The alkyds can conveniently be prepared by reaction of a carbohydrate, or a reactive derivative thereof, with fatty acids or derivatives thereof.

### 1. Carbohydrates.

Useful carbohydrate starting materials for the alkyds of this invention include carbohydrates having a hydroxyl group or a reactive derivative thereof such as a lower acyl ester or acid group. By "reactive derivatives thereof" is meant a derivative of the carbohydrate wherein at least some of the hydroxyl groups are replaced by other groups which are reactive with hydroxyl, ester, epoxy or acid groups. Such reactive groups on the carbohydrate would include ester, especially lower acyl ester, and acid groups. For example, some of the hydroxyl groups of the carbohydrate can be converted to lower acyl esters through an alcoholysis reaction with an ester such as methyl acetate, or converted into acid groups by reaction with an anhydride such as succinic anhydride. Useful carbohydrates include monosaccharides, for example, mannose, galactose, arabinose, xylose, ribose, apiose, rhamnose, psicose, fructose, sorbose, tagitose, ribulose, xylulose, and erythirulose. Oligosaccharides suitable for use herein include, for example, maltose, kojibiose, nigerose, cellobiose, lactose, melibiose, gentiobiose, turanose, rutinose, trehalose, sucrose and raffinose. Polysaccharides suitable for use herein include, for example, amylose, glycogen, cellulose, chitin, inulin, agarose, zylans, mannan and galactans. The carbohydrate starting materials can also be chain extended if desired by reaction, for example with polyisocyanates, or di or polyesters to increase molecular weight. Due to cost, availability and other considerations, one frequently useful carbohydrate is sucrose.

### 2. Preparation of carbohydrate-based alkyds by reaction with fatty acids and derivatives thereof.

These carbohydrates can be reacted with fatty acids, or fatty acid derivatives, as described herein, to produce alkyds having a carbohydrate backbone with some or all of the original carbohydrate hydroxyl equivalency esterified or otherwise reacted with unsaturated fatty acids, or fatty acid derivatives. As used herein, the term "fatty acid derivative" means a reactive derivative of a fatty acid, such as the acid chloride, anhydride, or ester thereof, including fatty acid oils such as triglycerides. The fatty acid chains of the fatty acids or fatty acid derivatives can be branched, linear, saturated, unsaturated, hydrogenated, unhydrogenated, or mixtures thereof. In one embodiment it is preferred that at least some of the fatty acid chains are unsaturated drying oil or semi-drying oil chains. Generally, drying oils have an iodine value of about 130 or higher and semi-drying oils have an iodine value of about 90 to about 130. In one embodiment, useful representative fatty acids include those containing linoleic, linolenic and/or oleic acids. Representative acids include soya fatty acid, tall oil fatty acid, coconut fatty acid, safflower fatty acid, linseed fatty acid, etc. If desired, the acids can be converted to their corresponding reactive derivatives such as esters, acid chlorides, or acid anhydrides. The acid chlorides are conveniently prepared by reaction of the fatty acid with a suitable chloride, such as thionyl chloride. Fatty acid anhydrides can be prepared by methods well known in the art such as reaction of the corresponding acid with a dehydrating agent such as acetic anhydride. Suitable fatty oils include sunflower oil, canola oil, dehydrated castor oil, coconut oil, corn oil, cottonseed oil, fish oil, linseed oil, oiticica oil, soya oil, tung oil, tall oil, castor oil, palm oil, safflower oil, blends thereof, and the like.

In general, the alkyds can be produced by the reaction of the carbohydrate and the fatty acid, fatty acid anhydride, fatty acid ester or oil by any method known in the art to produce the desired extent of reaction of the underlying carbohydrate hydroxyl groups. For example, U.S. 5,231,199 teaches synthesis of carbohydrate based alkyds by the reaction of the carbohydrate with a fatty acid lower alkyl ester, in general a fatty acid methyl ester, in the presence of a transesterification catalyst, such as e.g. an alkali metal hydroxide or carbonate, preferably in the presence of a stripping agent such as hexane or an inert gas. Other processes for the production of similar alkyds are taught in U. S. 3,963,699, U.S. 4,517,360, and U.S. 4,518772. U.S. patent 5,158,796 references U.S. 2,831,854, and teaches alkyds of carbohydrates having the majority, and preferably at least about 80%, of their hydroxyl groups esterified by fatty acids by such reaction mechanisms as transesterification of the carbohydrate with methyl, ethyl or glycerol fatty acid esters using a variety of catalysts; by acylation of the carbohydrate with a fatty acid chloride; or by acylation with the fatty acid itself. Generally, the reaction to produce carbohydrate-based alkyds can be conducted neat, or in a suitable solvent, including exempt solvents, or in the presence of a diluent.

Another useful method for preparing the alkyds is taught in U.S. published application 2002/0143137 A1 to Howle et. al. and involves the reaction of polyols such as saccharides with fatty acid esters in the presence of a basic catalyst, followed by separation of any remaining excess fatty acid ester once the desired degree of transesterification (alcoholysis) has taken place. The desired degree of esterification can be controlled by adjusting the amount of excess fatty acid ester and by monitoring the time and extent of reaction so that less than all the available hydroxyl groups are converted to esters. Another useful approach to prepare the fatty acid alkyds having hydroxyl groups which remain after the esterification is taught in U.S.2003/0229224 A1 to Schaefer et. al. In this process, a highly esterified fatty acid polyol polyester and a lesser (or non) esterified polyol are admixed to produce a first reaction product having an average degree of esterification less than that of the highly esterified starting material, followed by reaction with an additional polyol portion to further reduce the average level of esterification per carbohydrate molecule.

For purposes of this invention, the fatty acid or fatty acid derivative can be reacted with the carbohydrate in an amount to convert, on average, from 3% to 100% of the hydroxyl groups of the carbohydrate. Commercially available fatty acid modified carbohydrate based alkyds include the Sefose® products produced by Procter and Gamble. If desired, some of the hydroxyl groups of the carbohydrate could be reacted with other materials, such as by reaction to produce pendent (meth)acrylate groups as taught in U.S. published patent application 2006/0036029 to Tomko et al.

If desired, the carbohydrate based alkyd could be chain extended to increase its molecular weight. The chain extension is readily accomplished by reaction with a difunctional material which is reactive with the pendant groups of the carbohydrate or carbohydrate-based alkyd. The chain extension can be done before or after the reaction of the carbohydrate with the fatty acid. For example, if the carbohydrate or alkyd has remaining active hydrogen groups, such as hydroxyl groups, the chain extension can be by reaction with a poly or diisocyanate, optionally in the presence of a suitable catalyst such as a tertiary amine or a metal compound such as dibutyl tin dilaurate. Representative diisocyanates include isophorone diisocyanate, tetramethylene diisocyanate, hexamethylene diisocyanate, 1,4-naphthalene diisocyanate, and 2,4- or 2,6-toluene diisocyanates. Alternatively, di or poly functional acids, esters, or silanols or silanes, such as Silres® SY231, or Dow Corning 3037 or Z6018, or mercaptopropyl trimethoxysilane (General Electric silicone A-189) could also be utilized. If the carbohydrate has pendant ester groups, such as lower acyl esters, the chain extension can be accomplished representatively by transesterification with a diester. The chain extender should be added in only such amount as appropriate to obtain the desired molecular weight. For low viscosity, high solid applications, preferably the final number average molecular weight of the chain extended carbohydrate alkyd would typically be less than about 5,000, and for some embodiments less than about 4,000. Typically, number average molecular weight can be determined by gel permeation chromatography (GPC) calibrated against polystyrene standards.

For certain low VOC applications, it is often useful to produce the alkyds of this invention with a viscosity at 99% NVM of less than 10 Pa·s (10,000 centipoise), and frequently less than 5 Pa·s (5,000 centipoise), when measured at 25°C using a Brookfield LVT #3 spindle at 30 rpm. The very low viscosity and low molecular weight of these alkyds makes them especially useful as penetrating pretreatments for wood and other porous substrates.

The carbohydrate-based alkyds of this invention are particularly versatile due to their relatively low viscosity. The alkyds can be used alone or in combination with other materials to obtain a variety of desirable properties. For many applications, the alkyds of this invention will typically comprise at least 5%, and normally 5-100% by weight of all the materials comprising the polymerizable components of the pretreatments. In one embodiment, the alkyd of this invention will comprise between about 20% and 90%, and in another embodiment, between 30 and 70% of the polymerizable components of the combination.

The remaining materials could be other polymers such as other alkyds, polyesters, epoxies, vinyl resins, phenolics, fatty phenolics, acrylics, silicones, polyurethanes, polyureas, polyolefins, reactive diluents, natural oils, and mixtures thereof.

For air drying cures, the alkyds will typically contain driers to accelerate the air dry. Typical driers are well known in the art and include various salts of cobalt, zirconium, calcium, zinc, lead, iron, cerium, neodymium, aluminum and manganese. Cobalt driers are frequently useful and combinations of driers, such as combinations of cobalt and zirconium, are frequently used. Frequently the driers are used as octoates or naphthenates and are typically incorporated in an amount from 0.003-0.75% based on the weight of the air-drying materials. The coatings could be air dried at ambient temperatures or force dried at temperatures ranging up to 149°C (300°F) or higher depending upon the substrate.

If desired, solvents can be incorporated into the pretreatment compositions, but due to the relatively low molecular weight and low viscosity of the alkyds of this invention, the solvent requirements will be greatly reduced compared to many prior art alkyds. If desired, suitable solvents include mineral spirits, ketones, heterocyclics such as N-methyl-pyrrolidone, aromatic and aliphatic hydrocarbons, and esters such as t-butyl acetate and Oxsol® 100 (available from Kowa America).

The pretreatment compositions of this invention can also be formulated to include additives that do not adversely effect the curing of the coating. Suitable amounts of pigments, dyes, solvents, thixotropes, flow control additives, diluents, light stabilizers, UV absorbers such as transparent iron oxides, fire retardants, smoke suppressants, decolorizing additives, mildewcides, fungicides, algaecides, titanates, silanes such as methylphenyldimethoxysilane, and other materials can be utilized. Representative pigments include talcs, clays, silicas, barites, titanium dioxide, zinc oxide, carbon black, phthalocyanine blue, and synthetic polymeric pigments. When utilizing the pretreatment in combination with a transparent or semi transparent stain for staining wood, it is often desirable to incorporate only relatively minor amounts, if any, of hiding pigments into the pretreatment since hiding pigments tend to hide the natural color and appearance of the wood. In some embodiments it is useful to provide a pretreatment composition that is substantially free of hiding pigments.

### 3. Aqueous Stains

Stains are transparent or semi-transparent solutions or suspensions of coloring matter (dyes or pigments or both) in a vehicle designed to color a surface by penetration without hiding it, or to color a material into which it is incorporated. In contrast, paints are generally opaque solutions or suspensions of coloring material in a vehicle, designed to hide or cover a surface with an opaque film. Transparent stains are characterized by a substantial absence of hiding pigments. Semi-transparent stains typically will provide some coloration to the substrate while allowing the texture and grain of the substrate to clearly show through the coating. A solid color stain is in effect a low solids penetrating paint which has a higher level of hiding pigment than a semi-transparent stain, but which still allows the texture of the substrate to show through while hiding the grain of a wood substrate. Stains can be solvent borne or water borne. Solvent borne stains are well known and have many excellent properties, but due to their relatively low solids overall, the solvent borne stains frequently incorporate relatively high levels of solvent, which may be undesirable. Water borne stains also can have excellent properties, but they typically will not wet the substrates as well as solvent borne materials, may actually cause the substrate to swell and frequently will not be absorbed into the pores of the substrate as well as solvent borne materials.

Because stains do not have the hiding power of paints, and are not applied at the same relatively high dry film thickness of paints, substrates protected only by stains are subject to greater weathering, ultraviolet light exposure, and other destructive elements than are painted substrates. The multi-coat system of this invention allows for additional protection by utilizing the non-aqueous penetrating composition to provide additional protection beyond that which can be provided by a water borne stain alone, while still minimizing the amount of organic solvent necessary. When it is desirable to minimize the total amount of organic solvent, the staining system of this invention is especially useful when the stains are aqueous stains. As used herein, the term "aqueous stain" is meant to include all stains which can be stabily dispersed in water and is intended to include stains utilizing water-miscible polymers, dispersions, emulsions, and latexes wherein the volatile content is, or can be, predominantly water.

Water borne polymers useful in the production of aqueous stains are well known in the art, and include, without limitation, alkyds, polyesters, acrylics, and polyurethanes. Some representative aqueous stains are taught in US Patents 4,814,016 (maleinized linseed oil and water reducible alkyds), 5,149,729 (water borne acrylic polymers), 6,664,327 (water borne acrylics), 6,689,200 (water borne latexes, epoxies, alkyds and others), 5,310,780 and 5,912,299 (polyurethane dispersions) and many others. Commercially available aqueous stains include those sold under the Deckscapes® line by The Sherwin-Williams Company.

The multi-coat staining system of this invention may be applied to any substrate but in many embodiments is particularly suited to porous substrates such as wood, masonry, porous stone, synthetic fibers, composite decking, etc. If desired, pressure treated wood can be utilized. Both the non-aqueous pretreatment composition and the aqueous stain can be applied by brushing, roll coating, pad application, spraying, wiping or other method conventionally employed in the art. Although multiple coats of the pretreatment composition could be utilized, it is frequently useful to apply only a single application of the pretreatment. One or more applications of the stain can then be applied to the pretreated substrate.

The following examples have been selected to illustrate specific embodiments and practices of advantage to a more complete understanding of the invention. Unless otherwise stated, "parts" means parts-by-weight and "percent" is percent-by-weight.

### EXAMPLE 1

A representative example of pretreatment formulation can be prepared by admixing the following ingredients:

| Raw material | Parts by weight |
|---|---|
| Sucrose-based alkyd¹ | 560.54 |
| Aromatic naptha | 115.79 |
| Clay pigment | 2.81 |
| Soya lecithin | 6.75 |
| mildewcide | 9.83 |
| synthetic paraffin wax | 13.78 |
| WD-40® wax dispersion (40% wax) | 34.45 |
| Pine oil | 1.77 |
| Transparent yellow iron oxide² | 18.60 |
| 12% cobalt drier | 2.81 |
| 18% zirconium 2-ethylhexanoate drier | 5.63 |
| methyl ethyl ketoxime | 5.62 |
| Tinuvin® 1130 UV absorber | 3.08 |
| Tinuvin® 123 light stabilizer | 3.08 |

| | |
|---|---|
| ¹ Sefose® 1618 fatty acid alkyd from Proctor & Gamble having an average of about 7.75 the hydroxyl groups of the sucrose replaced with fatty acid moieties approximately 45% pigment dispersed in an alkyd | |

The pretreatment formula described above has a VOC of less than 185 grams per liter (a weight per gallon of approximately 7.85 pounds). The pretreatment can be applied directly to a wood substrate, preferably at temperatures above about 1,7°C (35°F) and subsequently topcoated with a water reducible stain such as Deckscapes® Waterborne Semi-Transparent Stain or Deckscapes® Waterborne Solid Color Deck Stain, both of which are commercially available from The Sherwin-Williams Company.

While this invention has been described by a specific number of embodiments, other variations and modifications may be made without departing from scope of the invention as set forth in the appended claims.

## Claims

1. A multi-coat system for staining a substrate which system comprises:
(a) a first coat comprising a non-aqueous pretreatment composition ; and
(b) a second coat comprising an aqueous stain composition;
wherein the non-aqueous pretreatment composition comprises a carbohydrate-based alkyd having pendent fatty acid residues.

2. The multi-coat system of claim 1 wherein the pendent fatty acid residues of the carbohydrate-based alkyd are drying oil or semi-drying oil residues or comprise the residues of linoleic, linoleic or oleic acids.

3. The multi-coat system of claim 1 wherein the pendent fatty acid residues of the carbohydrate-based alkyd have replaced from 3 to 100% of the total hydroxyl equivalency of the underlying carbohydrate.

4. The multi-coat system of claim 1 wherein the carbohydrate-based alkyd has a number average molecular weight less than 5,000, preferably less than 4,000.

5. The multi-coat system of claim 1 wherein the carbohydrate-based alkyd is a sucrose-based alkyd.

6. The multi-coat system of claim 1 wherein the non-aqueous pretreatment composition comprises a wax or a silane or at least one organic solvent or a drier.

7. The multi-coat system of claim 1 wherein the aqueous stain composition is a semi-transparent stain.

8. A process for staining a substrate which process comprises:
(a) applying to the substrate a first coat comprising a non-aqueous pretreatment composition comprising a carbohydrate-based alkyd having pendent fatty acid residues; and
(b) applying to the first coat a second coat comprising an aqueous stain.

9. The process of claim 8 wherein the pendent fatty acid residues of the carbohydrate-based alkyd are drying oil or semi-drying oil residues or comprise the residues of linoleic, linolenic or oleic acids.

10. The process of claim 8 wherein the pendent fatty acid residues of the carbohydrate-based alkyd have replaced from 3 to 100% of the total hydroxyl equivalency of the underlying carbohydrate.

11. The process of claim 8 wherein the carbohydrate-based alkyd has a number average molecular weight less than 5,000, preferably less than 4,000.

12. The process of claim 8 wherein the carbohydrate-based alkyd is a sucrose-based alkyd.

13. The process of claim 8 wherein the non-aqueous pretreatment composition comprises a wax or a silane or at least one organic solvent or a drier or has a volatile organic content (VOC) less than 250 grams per liter when applied to the substrate.

14. The process of claim 8 wherein the aqueous stain composition is a semi-transparent stain.

15. A substrate coated by the coating process of claim 8.

## Patentansprüche

1. Ein Mehrschichtsystem zum Färben eines Substrats, wobei das System umfasst:
(a) eine erste Schicht, umfassend eine nichtwässrige Vorbehandlungszusammensetzung, und
(b) eine zweite Schicht, umfassend eine wässrige Färbezusammensetzung,
wobei die nichtwässrige Vorbehandlungszusammensetzung ein auf Kohlenhydrat basierendes Alkyd mit anhängenden Fettsäureresten umfasst.

2. Das Mehrschichtsystem nach Anspruch 1, wobei die anhängenden Fettsäurereste des auf Kohlenhydrat basierenden Alkyds Reste von trocknendem Öl oder halbtrocknendem Öl sind oder die Reste von Linol-, Linolen- oder Ölsäure umfassen.

3. Das Mehrschichtsystem nach Anspruch 1, wobei die anhängenden Fettsäurereste des auf Kohlenhydrat basierenden Alkyds 3 bis 100% der gesamten Hydroxyläquivalenz des zugrundeliegenden Kohlenhydrats ersetzt haben.

4. Das Mehrschichtsystem nach Anspruch 1, wobei das auf Kohlenhydrat basierende Alkyd ein zahlengemitteltes Molekulargewicht von weniger als 5000, vorzugsweise weniger als 4000, besitzt.

5. Das Mehrschichtsystem nach Anspruch 1, wobei das auf Kohlenhydrat basierende Alkyd ein auf Saccharose basierendes Alkyd ist.

6. Das Mehrschichtsystem nach Anspruch 1, wobei die nichtwässrige Vorbehandlungszusammensetzung ein Wachs oder ein Silan oder wenigstens ein organisches Lösungsmittel oder ein Trockenmittel ist.

7. Das Mehrschichtsystem nach Anspruch 1, wobei die wässrige Färbezusammensetzung ein halbtransparentes Färbemittel ist.

8. Ein Verfahren zum Färben eines Substrats, wobei das Verfahren umfasst:
(a) Auftragen einer ersten Schicht, die eine nichtwässrige Vorbehandlungszusammensetzung, umfassend ein auf Kohlenhydrat basierendes Alkyd mit anhängenden Fettsäureresten, umfasst, auf das Substrat und
(b) Auftragen einer zweiten Schicht, die ein wässriges Färbemittel umfasst, auf die erste Schicht.

9. Das Verfahren nach Anspruch 8, wobei die anhängenden Fettsäurereste des auf Kohlenhydrat basierenden Alkyds Reste von trocknendem Öl oder halbtrocknendem Öl sind oder die Reste von Linol-, Linolen- oder Ölsäure umfassen.

10. Das Verfahren nach Anspruch 8, wobei die anhängenden Fettsäurereste des auf Kohlenhydrat basierenden Alkyds 3 bis 100% der gesamten Hydroxyläquivalenz des zugrundeliegenden Kohlenhydrats ersetzt haben.

11. Das Verfahren nach Anspruch 8, wobei das auf Kohlenhydrat basierende Alkyd ein zahlengemitteltes Molekulargewicht von weniger als 5000, vorzugsweise weniger als 4000, besitzt.

12. Das Verfahren nach Anspruch 8, wobei das auf Kohlenhydrat basierende Alkyd ein auf Saccharose basierendes Alkyd ist.

13. Das Verfahren nach Anspruch 8, wobei die nichtwässrige Vorbehandlungszusammensetzung ein Wachs oder ein Silan oder wenigstens ein organisches Lösungsmittel oder ein Trockenmittel ist oder einen Gehalt an flüchtigen organischen Verbindungen (VOC) von weniger als 250 Gramm pro Liter besitzt, wenn auf das Substrat aufgetragen.

14. Das Verfahren nach Anspruch 8, wobei die wässrige Färbezusammensetzung ein halbtransparentes Färbemittel ist.

15. Ein durch das Beschichtungsverfahren nach Anspruch 8 beschichtetes Substrat.

## Revendications

1. Système multicouche pour coloration d'un substrat, lequel système comprenant :
(a) une première couche comprenant une composition de prétraitement non aqueuse ; et
(b) une deuxième couche comprenant une composition de coloration aqueuse ;
où la composition de prétraitement non aqueuse comprend un alkyde à base d'un hydrate de carbone ayant des résidus acides gras pendants.

2. Système multicouche de la revendication 1, où les résidus acides gras pendants de l'alkyde à base d'un hydrate de carbone sont des résidus d'une huile siccative ou d'une huile semi-siccative ou comprennent des résidus d'acides linoléiques, linoléniques ou oléiques.

3. Système multicouche de la revendication 1, où les résidus acides gras pendants de l'alkyde à base d'un hydrate de carbone ont remplacé de 3 à 100 % de l'équivalence hydroxyle totale de l'hydrate de carbone de base.

4. Système multicouche de la revendication 1, où l'alkyde à base d'un hydrate de carbone a une masse moléculaire moyenne en nombre inférieure à 5 000, de préférence inférieure à 4000.

5. Système multicouche de la revendication 1, où l'alkyde à base d'un hydrate de carbone est un alkyde à base de sucrose.

6. Système multicouche de la revendication 1, où la composition de prétraitement non aqueuse comprend une cire ou un silane ou au moins un solvant organique ou un produit desséchant.

7. Système multicouche de la revendication 1, où la composition de coloration aqueuse est un colorant semi-transparent.

8. Procédé de coloration d'un substrat, lequel procédé comprenant :
(a) l'application sur le substrat d'une première couche comprenant une composition de prétraitement non aqueuse comprenant un alkyde à base d'un hydrate de carbone ayant des résidus acides gras pendants ; et
(b) l'application sur la première couche d'une deuxième couche comprenant un colorant aqueux.

9. Procédé de la revendication 8, où les résidus acides gras pendants de l'alkyde à base d'un hydrate de carbone sont des résidus d'une huile siccative ou d'une huile semi-siccative ou comprennent des résidus d'acides linoléiques, linoléniques ou oléiques.

10. Procédé de la revendication 8, où les résidus acides gras pendants de l'alkyde à base d'un hydrate de carbone ont remplacé de 3 à 100 % de l'équivalence hydroxyle totale de l'hydrate de carbone de base.

11. Procédé de la revendication 8, où l'alkyde à base d'un hydrate de carbone a une masse moléculaire moyenne en nombre inférieure à 5 000, de préférence inférieure à 4 000.

12. Procédé de la revendication 8, où l'alkyde à base d'un hydrate de carbone est un alkyde à base de sucrose.

13. Procédé de la revendication 8, où la composition de prétraitement non aqueuse comprend une cire ou un silane ou au moins un solvant organique ou un produit desséchant, ou a une teneur en matières organiques volatiles (VOC) inférieure à 250 grammes par litre à l'application sur le substrat.

14. Procédé de la revendication 8, où la composition de coloration aqueuse est un colorant semi-transparent.

15. Substrat revêtu par le procédé de revêtement de la revendication 8.
